# EUROPÄISCHE PATENTSCHRIFT

(11) **EP 1 532 514 B1**
(45) Veröffentlichungstag und Bekanntmachung des Hinweises auf die Patenterteilung: **12.04.2006**
(21) Anmeldenummer: 03766370.5
(22) Anmeldetag: 30.07.2003
(51) Int. Cl.: G06F 3/12

(54) **VERFAHREN, GERÄTESYSTEM UND COMPUTERPROGRAMMPRODUKT ZUM DOKUMENTENBEZOGENEN ERWEITERN EINES RESOURCENSTRUKTURIERTEN DOKUMENTENDATENSTROMS**
METHOD, SYSTEM OF DEVICES, AND COMPUTER PROGRAM PRODUCT FOR THE DOCUMENT-RELATED EXTENSION OF A RESOURCE-STRUCTURED DOCUMENT DATA FLOW
PROCEDE, SYSTEME D'APPAREILS ET PRODUIT PROGRAMME INFORMATIQUE POUR L'ELARGISSEMENT RELATIF AUX DOCUMENTS D'UN FLUX DE DONNEES DE DOCUMENTS A RESSOURCES STRUCTUREES

(30) Priorität: 01.08.2002 DE 10235254
(43) Veröffentlichungstag der Anmeldung: 25.05.2005
(73) Patentinhaber: Océ Printing Systems GmbH, 85586 Poing (DE)
(72) Erfinder: LA ROSA DUCATO, José, 85435 Erding (DE); CLAUSEN, Torsten, 85570 Markt Schwaben (DE); MACH, Cam, Hung, 85435 Erding (DE)
(74) Vertreter: Schaumburg, Thoenes, Thurn, Landskron
(86) Internationale Anmeldenummer: PCT/EP2003/008439
(87) Internationale Veröffentlichungsnummer: WO 2004/013748

(56) Entgegenhaltungen:
- EP-A- 1 139 275
- EP-A- 1 156 411

## Beschreibung

Die Erfindung betrifft ein Verfahren, ein Gerätesystem und ein Computerprogrammprodukt zum Verarbeiten eines Dokumentendatenstroms, der strukturierte Felder enthält. Ein typisches Dokumentendatenformat dieser Art ist das Format AFP™ (Advanced Function Presentation). Es wird insbesondere in elektronischen Produktionsdruck-Umgebungen, verwendet, d.h. in Datenverarbeitungs- und Drucksystemen, die Dokumentendaten mit einer Geschwindigkeit von bis zu einigen tausend Seiten pro Minute verarbeiten.

Derartige Dokumentenproduktionssysteme weisen einen hohen Automatisierungsgrad auf. In der US-A-6,137,967 ist beispielsweise ein Drucksystem mit integrierter Qualitätsprüfung beschrieben.

Verschiedene Druckdatenströme und Drucksysteme sind beispielsweise in der Veröffentlichung "Das Druckerbuch", Dr. Gerd Goldmann (Herausgeber), Ocè Printing Systems GmbH, 6. Ausgabe (Mai 2001), ISBN 3-00-001019-x beschrieben. In Kapitel 14 ist das Serversystem Oce PRISMApro beschrieben. Dieses flexible Druckdaten-Serversystem ist beispielsweise dazu geeignet, Druckdaten von Datenquellen wie einem Quell-Computer, der Druckdaten in einer bestimmten Druckdatensprache wie Line Data (Zeilendaten), AFP, PCL (Printer Command Language), PostScript, SPDS (Siemens Print Data Stream) oder in der von der Firma Xerox Coperation entwickelte Sprache LCDS an ein Druckproduktionssystem zu übertragen.

Details des resourcenstrukturierten Dokumentendatenstroms AFP™ sind in der Publikation Nr. S-544-3884-02, herausgegeben von der Firma International Business Machines Corp. (IBM) mit dem Titel "AFP Programming Guide and Line Data Reference" beschrieben. Diese Dokumentation ist über die Addresse IBM Printing Systems Division, Dept. H7FE, Building 004M, Information Development, PO Box 1900, Boulder CO 80301-9191 USA oder über
http://publib.boulder.ibm.com/prsys/pdfs/54438842.pdf zu beziehen.

Der Dokumentendatenstrom AFP wurde weiterentwickelt zu dem resourcenstrukturierten Dokumentendatenstrom MO:DCA™, welcher in der IBM-Publikation SC31-6802-05 (April 2001) mit dem Titel "Mixed Object Document Content Architecture Reference" beschrieben ist. Dieses Dokument ist auch unter der Internet-Addresse
http://publib.boulder.ibm.com/prsys/pdfs/c3168025.pdf
zugänglich. Details dieses Datenstroms, insbesondere die Verwendung von strukturierten Feldern (structured fields), sind auch in der US-A-5,768,488 beschrieben. Im Rahmen der vorliegenden Beschreibung wird zwischen AFP- und MO:DCA-Datenströmen nicht unterschieden.

AFP/MO:DCA-Datenströme werden im Zuge von Druckproduktionsaufträgen häufig in Datenströme des Formats Intelligent Printer Data Stream™ (IPDS™) umgewandelt und in diesem Format an einen Hochleistungsdrucker übertragen. In der US-A-5,982,997 ist ein solcher Prozeß gezeigt.

In der Spezifikation "UP³I; Universal Printer Pre- and PostProcessing Interface", Version 1.02 (Juli 2002), herausgegeben von den Firmen Duplo International Ltd., Hunkeler AG, IBM Coperation, Océ Printing Systems GmbH und Strälfors AB, die unter der Internet-Adresse www.up3i.org als Datei heruntergeladen werden kann, sind verschiedenste Steuerbefehle vorgesehen, die bei der Erstellung eines gedruckten Dokuments zur Steuerung verschiedener Geräte eines Druckproduktionssystems wie Druckgeräten und diesen vor- und nachgeschalteten Geräten wie z.B. Abrollern, Schneidegeräten, Lochgeräten, Heftgeräten und Bindegeräten, verwendet werden können. Dabei ist vorgesehen, dass derartige Daten zwischen den unterschiedlichen Geräten, also z.B. zwischen einer Papierspendevorrichtung und einem Druckgerät ausgetauscht werden.

Auf den Seiten 134 bis 141 der UP³I-Spezifikation sind bereits Beispiele genannt, wie Befehle für Druckvor- bzw. Nachverarbeitungsgeräte in einen AFP (MO:DCA) bzw. IPDS-Datenstrom eingefügt werden können. Mit den UP³I-Erweiterungen können AFP-Anwendungen nun UP³I-Kontrollkommandos beinhalten, die zu einem Drucker übertragen werden, wobei druckerspezifische Datenformate wie IPDS verwendet werden können. Die UP³I-Kontrolldaten sind dabei zunächst mit den Druckdaten vermischt und werden erst im Drucker von diesen getrennt. Über die UP³I-Schnittstelle des Druckers können dann die weiteren Geräte des Druckproduktionssystems angesprochen werden, d. h. Vor- und Nachverarbeitungsgeräte für das Druckgut wie Papierspender, Abroller, Stapler, Locher, Faltgeräte, Schneidegeräte und Bindegeräte.

Neue AFP-Anwendungen können bereits von Anfang so kodiert werden, daß UP³I-Funktionen genutzt werden. Anders ist dies bei älteren AFP-Anwendungen. Derartige, teilweise seit vielen Jahren angewandte Anwendungen für Standardausdrucke, wie z. B. Rechnungsausdrucke oder Kontoauszüge, müssen verändert werden, wenn sie UP³I-Funktionen nutzen sollen.

Aus der IBM-Veröffentlichung Nr. S544-5284-06 "IBM Page Printer Formatting Aid: User's Guide", 7^{th} edition, die z.B. unter http://publib.boulder.ibm.com/prsys/pdfs/54452846.pdf zugänglich ist, ist ein Tool bekannt, mit dem ein Anwender einen bestehenden AFP Dokumentendatenstrom bzw. eine in diesem Dokumentendatenstrom befindliche Formatdefinitions-Resourcendatei "Formdef" mit zusätzlichen Befehlen versehen kann. Dies erfolgt über eine Kontrolldatei, in der eingetragen wird, wenn eine sogenannte Copygroup bzw. Medium Map mit einem bestimmten Namen erzeugt werden muß.

Bei dieser Art der Datenanreicherung müssen in der Datei, in der die variablen Daten stehen, jeweils entsprechende Aufrufe der Media Maps hinterlegt werden um die in der Formdef-Datei erzeugten Befehle auf die variablen Daten wirken lassen zu können. Diese manuelle Umprogrammierung des Datenstroms kann - vor allem, wenn mehrere, z. B. 3 oder mehr, Copygroups neu einzufügen sind - ein sehr komplexer Vorgang werden, der fehleranfällig ist. Der dabei entstehende Aufwand für den Anwender ist beträchtlich und es besteht die Gefahr von Fehleingaben, wenn Media-Map-Aufrufe nicht korrekt aktualisiert werden, z.B. nicht synchron zu den Einträgen in der formdef-Datei verändert werden.

Weiterhin kann es vorkommen, daß ein- und derselbe Ursprungs-Datenstrom mit verschiedenen Druckproduktionssystemen und somit mit verschiedenen Finishing-Möglichkeiten verarbeitet werden. Die Anwendung muß dann erneut für die jeweilige Konfiguration des Druckproduktionssystems angepaßt werden, was unter Produktionsbedingungen zu unerwünschten Zeitverzögerungen führen kann.

In der Patentanmeldung Nr. PCT/EP02/05299, die die Anmelderin am 14.05.2002 mit dem Titel "Verfahren, Gerätesystem und Computerprogrammsystem zur Verarbeitung von Dokumentendaten" eingereicht hat, ist beschrieben, wie Zusatzdaten, wie z. B. Barcodes, automatisch in einen Dokumentendatanstrom eingefügt werden können.

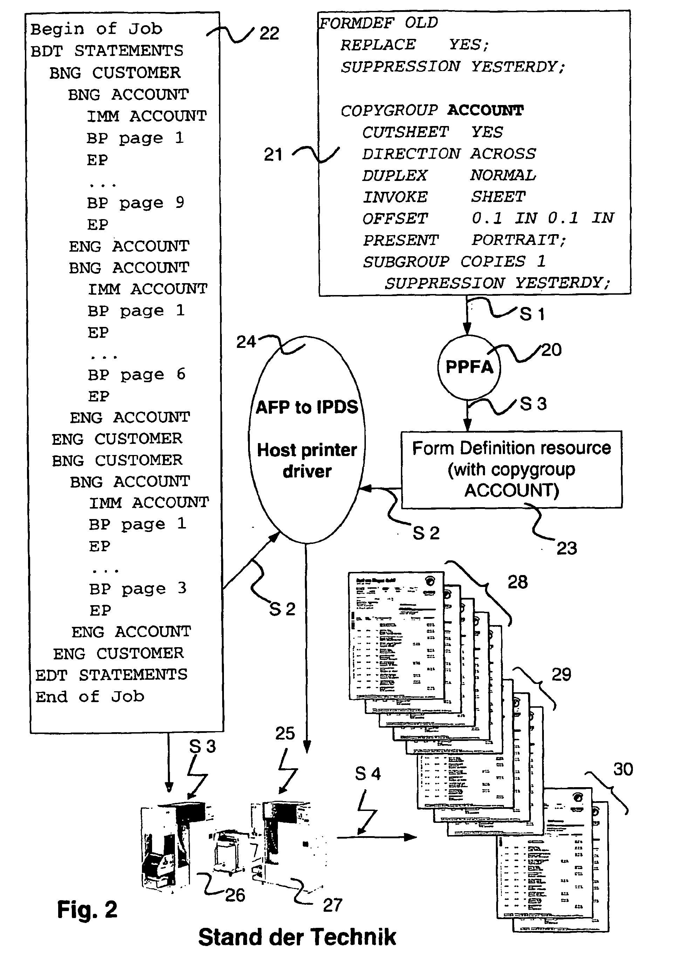

In Figur 2 ist eine konventionelle Verarbeitung eines AFP-Druckdokumentendatenstroms ohne Unterstützung von Finishing- bzw. UP³I-Funktionalitäten dargestellt. Die verschiedenen Verarbeitungsschritte zeigen, was ein AFP-Anwendungsdesigner (Anwender) zu tun hat, um eine Anwendung zu erstellen: mittels eines Formatierungs-Computerprogramms 20, das z. B. das eingangs erwähnte Page Printer Formatting Aid (PPFA) Tool der Firma IBM oder der im oben eingeführten Druckerbuch beschriebenen Smart Layout Editor (SLE) sein kann, und einer Kontrolldatei 21 mit korrespondierenden Formatierungsparametern erzeugt der Anwender eine Formdef-Datei (Resource) 23, die eine Copygroup (Medium Map) mit dem Namen ACCOUNT enthält.

Eine Druckdatendatei 22, die variable Daten enthält, wird vom Anwender so aufbereitet, daß sie die Copygroup, welche mit der Kontrolldatei 21 angelegt wurde, mit strukturierten Feldern des Typs Invoce Medium Map (IMM) "IMM Account", die zwischen den variablen Daten stehen, aufgerufen wird. Einzelheiten zu den strukturierten Feldtyp IMM können dem eingangs genannten IBM-Dokument SC31-6802-05 entnommen werden.

In dem in Figur 2 dargestellten Beispiel enthält die Druckdatendatei Kontoauszugs-Dokumente für zwei verschiedene Kunden einer Bank. Für den ersten Kunden enthält die Druckdatendatei 22 zwei Kontoauszüge mit jeweils 9 Seiten und 6 Seiten. Für den zweiten Kunden soll ein Kontoauszugs-Dokument mit 3 Seiten ausgedruckt werden. Dazu wird die Druckdatendatei 22 und die Formdef-Datei 23 einem Host-Druckertreiber 24 zugeführt, der im Schritt S3 aus den beiden Dateien und ggf. zusätzlicher Ressourcen-Dateien, wie z. B. Fonts, einen Druckdatenstrom des Formats IPDS bildet, mit dem ein IPDS-fähiges Drucksystem 25 angesteuert wird. Das Drucksystem 25 besteht im gezeigten Beispiel aus einem ersten Drucker 26, in dem die Vorderseite eines bahnförmigen Aufzeichnungsträgers bedruckt wird und einem zweiten Drucker 27, in dem die Rückseite desselben Aufzeichnungsträgers mit den jeweils zugehörigen Daten bedruckt wird.

Im Schritt S4 werden die zuvor genannten Dokumente ausgedruckt, d. h. als erstes Dokument 28 der erste Ausdruck des ersten Kunden, der fünf Einzelblätter umfaßt, als zweites Dokument 29 drei Blätter für den ersten Kunden mit dem zweiten Kontoauszug und als drittes Dokument 30 zwei Blätter für den zweiten Kunden.

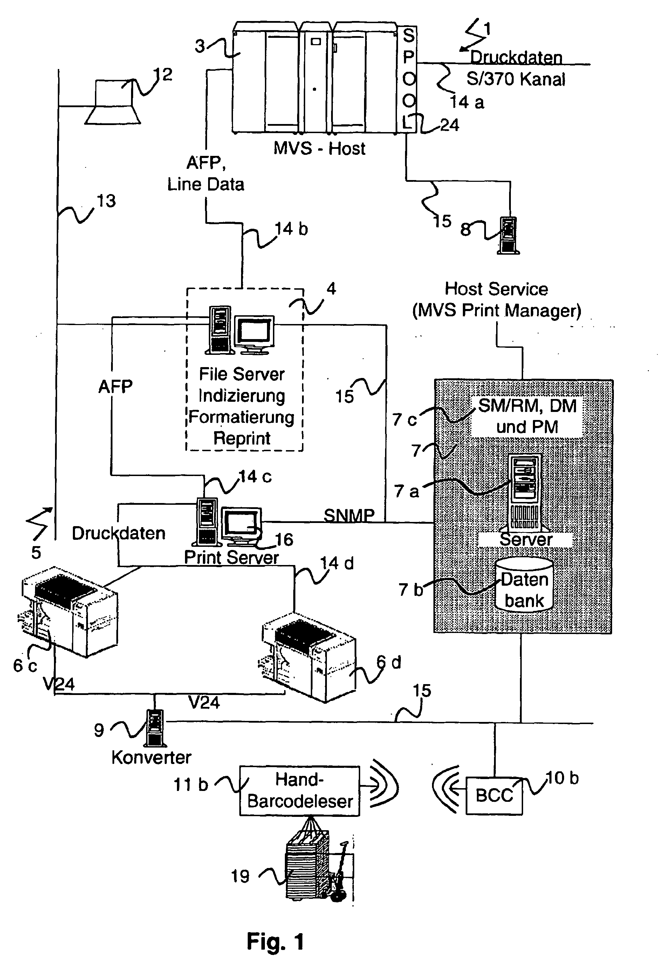

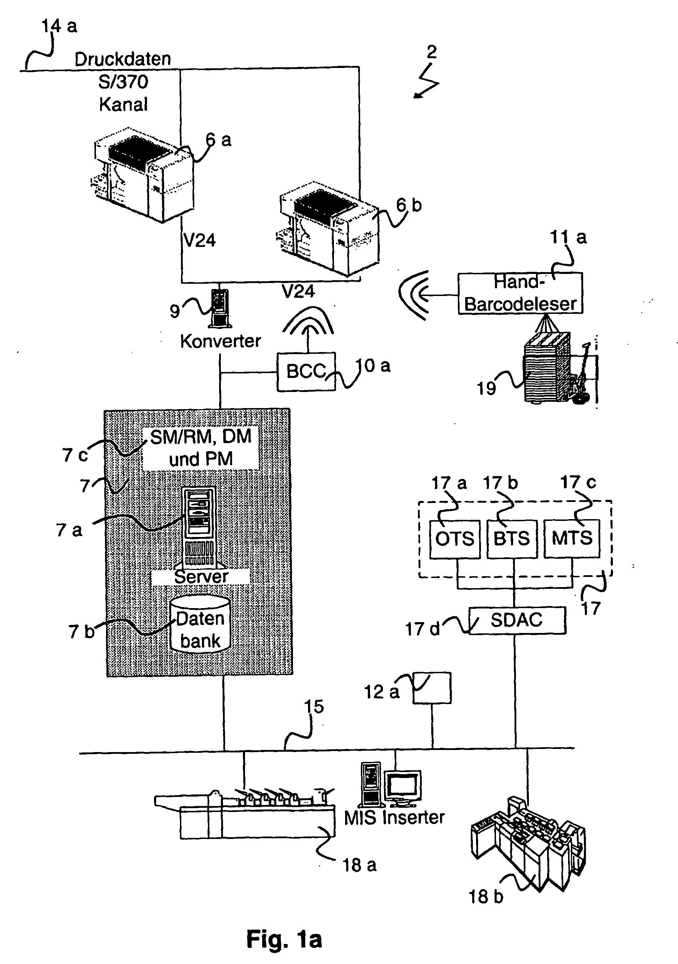

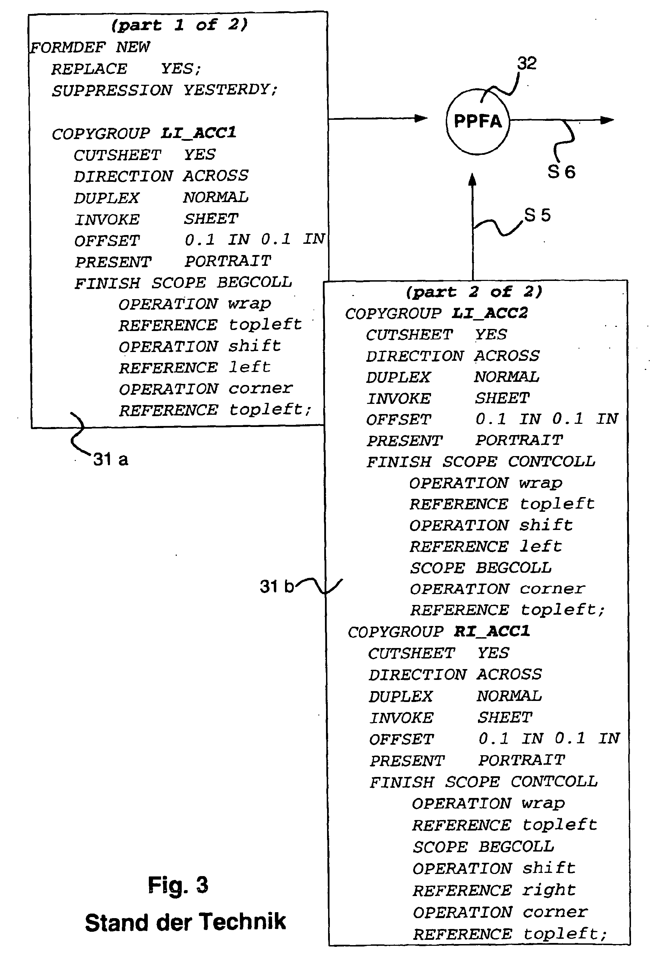

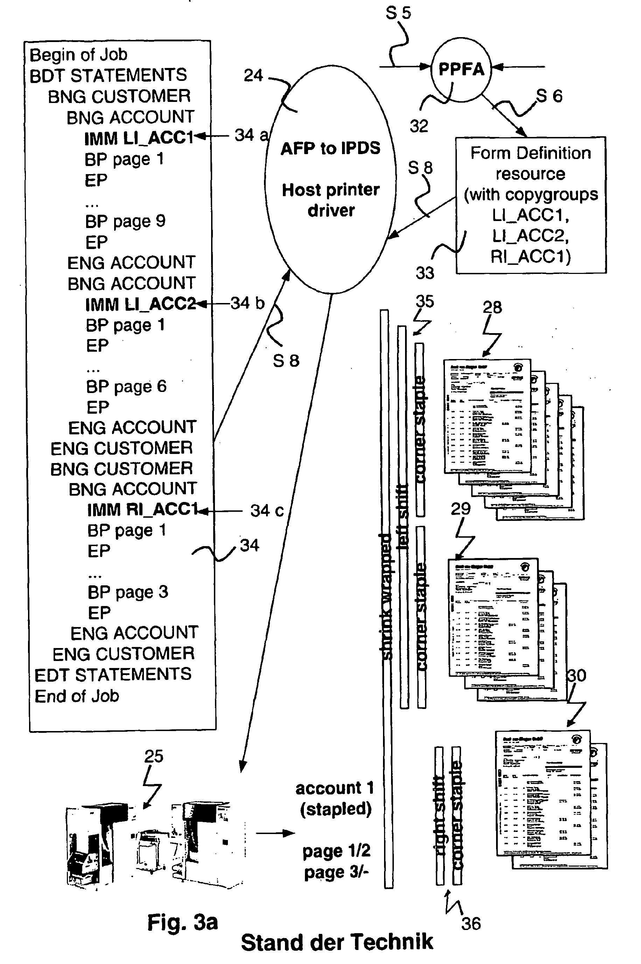

In Figur 3 ist dieselbe Anwendung wie in Figur 1 gezeigt, wobei sie manuell erweitert wird um zusätzliche Finishing-Befehle für Druckvor- bzw. Nachverarbeitungsgeräte, wie sie in der UP³I-Spezifikation vorgesehen sind. Im Fall der Figur 3 sind die Finishing-Befehle Folien-Einschweißung (Shrink-Wrap), Seitenversatz (Left/Right/Shift) sowie Dokumentenheftung (Corner Staple) vorgesehen, die auf das bedruckte Druckgut bzw. Teile davon angewandt werden sollen. Anhand der Figur 3 wird beschrieben, welche Arbeitsschritte nötig sind, wenn dieses Ziel mit dem bereits eingangs beschriebenen Tool der Firma IBM "Page Printer Formatting Aid" (PPFA) oder mit dem von der Anmelderin bekannten Smart Layout Editor (SLE) erledigt wird.

Im Schritt S5 wird mit dem Page Printer Formatting Aid Tool (siehe oben) oder mit dem Tool Small Layout Editor (SLE), das in dem eingangs eingeführten "Druckerbuch" der Océ Printing Systems GmbH beschrieben ist, vom Anwender eine neue Formdefinition-Datei als Ressourcen-Datei erzeugt. Die Parameter sind in einer PPFA-Kontrolldatei 31 spezifiziert (lediglich aus Darstellungsgründen ist in Figur 3 die Kontrolldatei 31 in einen ersten Teil 31a und einen zweiten Teil 31b unterteilt). Die Kontrolldatei 31 zeigt, daß drei Copygroups (Medium Map Felder) benötigt werden, um die gewünschten Finishing-Funktionen ansteuern zu können. Die UP³I-Kontrollkommandos für das Folienverschweißen, den Versatz und das Stapeln sind Teil der neuen Medium Maps, z. B. OPERATION SHIFT und REFERENCE left für den Versatz.

Die im Schritt S5 erzeugte PPFA-Kontrolldatei 31 verwendet das PPFA-Computerprogramm 32 dazu, um im Schritt S6 eine Formdef-Datei zu erzeugen, in denen die in der PPFA-Kontrolldatei 31 definierten Copygroups (LI_ACC1, LI_ACC2 und RI_ACC1 enthalten sind). Diese neuen Medium Maps ersetzen die in Figur 1 in der Formdef-Datei 23 enthaltene Copygroup (Medium Map) ACCOUNT.

Zusätzlich zu den Änderungen in der Formdef-Datei 23 muß der Anwender die Druckdatendatei modifizieren, so daß die strukturierten Felder Invoce Medium Map (IMM) mit dem neuen Medium-Map-Namen synchronisiert werden. Dabei muß der Anwender den jeweiligen alten IMM-Aufruf durch einen korrekten neuen IMM-Aufruf ersetzen, der den jeweils gewünschten Finishing-Operationen entspricht. Im Beispiel der Figuren 2 und 3 sind statt den jeweils identischen Aufrufen 22a, 22b und 22c "ACCOUNT" für die drei Dokumente 28, 29, 30 nunmehr unterschiedliche Aufrufe einzufügen: der Aufruf IMM LI_ACC1 34a, wobei das Dokument links abgelegt und geheftet wird, ist dem Dokument 28 zuzufügen und der Aufruf IMM LI_ACC2 34b, wobei das Dokument links abgelegt und geheftet wird, dem Dokument 29. Für das Dokument 30 ist der Aufruf IMM RI_ACC1 einzufügen, wobei das Dokument rechts abgelegt und geheftet wird. Diese Zuordnung muß in der Druckdatendatei 34 manuell erfolgen, wenn die Druckdatendatei bereits besteht oder die in Figur 1 gezeigte Struktur 22 hat. Andernfalls müßte die Druckdatendatei völlig neu durch ein entsprechendes Anwendungsprogramm erzeugt werden, was jedoch unter Umständen sehr zeitaufwendig ist. Zur Synchronisierung ist es also notwendig, daß Copygroups a) vorhanden sind, b) im Datenstrom passende Parameter zur formdef-Datei haben und c) deren Aufrufe genau an der richtigen Stelle des Druckdatenstroms stehen.

Im Schritt S8 werden die Formdef-Datei 33 und die Druckdatendatei 34 wiederum vom Host-Druckertreiber 24 vom AFP-Format in einen IPDS-Druckerdatenstrom umgewandelt und an das IPDSfähige Drucksystem 25 gesandt. Die Kommandos, welche sich auf die Vor- bzw. Nachverarbeitungsgeräte (UP³I-Kommandos) beziehen und die in der Medium Map enthalten sind, werden in korrespondierende IPDS/UP³I-Triplets konvertiert, bevor sie zum Drucker gesandt werden. Wie bereits in Figur 2 werden die resultierenden gedruckten Dokumente 28, 29, 30 gruppiert, wobei im Falle der Figur 3 die Blätter gruppenweise geheftet und geschoben sowie alle zusammen in einer Schutzhülle eingeschweißt werden, wie dies vom Anwender spezifiziert wurde.

Die beschrifteten Streifen 35, 36 zeigen die jeweiligen Nachverarbeitungsschritte der nebenstehenden Dokumente.

Ein Anwender, der mit dem in Figur 3 gezeigten Verfahren einen AFP-Druckdatenstrom um Nachverarbeitungs-Funktionalitäten (z. B. UP³I) erweitern möchte, muß die ursprüngliche PPFA-Kontrolldatei zur Verfügung haben und desweiteren Zugang haben zum Anwenderprogramm, das den originären Druckdatenstrom erzeugt hat. Dies ist jedoch nicht immer gegeben. Es ist deshalb ein Bedürfnis, bestehende AFP-Druckdatenströme um zusätzliche Geräte-Funktionalitäten zu erweitern, um einen möglichst automatisierten Prozeß zur Erzeugung von komplexeren Dokumenten zu ermöglichen, ohne daß auf alte Steuerungsdateien bzw. Anwenderprogramme zugegriffen werden muß, die beim Erzeugen des Datenstroms maßgebend waren.

Zusammenfassend ist festzustellen, daß bei dem nach Figur 3 gezeigten Verfahren der Anwender zumindest folgende Schritte durchführen muß:
a) Er muß bestehende Copygroups verändern, welche eine Finishing-Operation enthalten. Hierzu stehen Tools wie das Computerprogramm PPFA zur Verfügung.
b) Er muß neue Copygroups hinzufügen, die jeweils am Beginn einer Finishing-Operation stehen oder deren Fortsetzung anzeigen und
c) er muß den Druckdatenstrom modifizieren, um die modifizierten, bzw. eingefügten Medium Maps (Copygroups) aufzurufen.

Die oben genannten Schritte sind umso aufwendiger, je größer die jeweilige Anwendung ist, d.h. je mehr Dokumente in der Anwendung enthalten sind und/oder je mehr Medium Maps/Copygroups in der Formdef-Datei enthalten sind. Typische AFP-Anwendungen bestehen aus mehreren Tausend bis zu Hunderttausenden von Blättern. Eine typische AFP Formdef-Datei enthält mehrere Medium Maps, z. B. in einem sogenannten Mixplex-Auftrag, bei dem verschiedene Papiereinzugsfächer und/oder Simplex/Duplex-Druckbefehle innerhalb eines Druckauftrages abwechseln. Aufwand und Fehleranfälligkeit bei der Aufbereitung von derartigen Druckdatenströmen sind deshalb unter Umständen sehr groß.

In der US-A-5,768,488 sind Möglichkeiten zum Einfügen von Informationen in einen MO:DCA-Datenstrom beschrieben. Des weiteren ist in dem Artikel PrePress, Ausg. 8/99, S. 18-27 angegeben, dass das Host-Input-Modul des Programms "Hausdruckerei Manager" , Vers. 6.1 des Systemanbieters Danka das Hinzufügen von Informationen, die nicht in AFP/IPDS-Datenströmen enthalten sind, beispielsweise Befehle für Duplexdruck und Endverarbeitung, gestattet.

Aus der DE 100 24 523 A1 ist ein Verfahren zur Anreicherung eines Dokumentendatenstroms um Daten für Peripheriegeräte bekannt.

Aus dem Dokument EP-A-1 139 275 ist bekannt, einen GDI-Druckdatenstrom nach Adressdaten zu durchsuchen, die aus diesem Druckdatenstrom extrahiert werden. Anschließend werden die extrahierten Daten dem Datenstrom wieder zugeführt.

Aus dem Dokument EP-A-1 156 411 ist bekannt, ein elektronisches Jobticket zu erstellen, mit dessen Hilfe aus nicht druckfähigen Daten, die Vorlagen und Textdaten umfassen, einen Druckdatenstrom erzeugt wird.

Aus dem Dokument WO 01/77807 A2 ist ein Verfahren und System zum Verarbeiten eines Druckdatenstroms bekannt, das einen Druckdatenstrom eines ersten Datenformats in einen Druckdatenstrom eines zweiten normierten Formats umsetzt.

Es ist Aufgabe der Erfindung, das Einfügen von Finishing-Operationen in bestehende strukturierte Dokumentendatenströme zu automatisieren.

Diese Aufgabe wird durch die in den unabhängigen Ansprüchen angegebene Erfindung gelöst. Vorteilhafte Ausführungsformen der Erfindung sind in den Unteransprüchen angegeben.

Erfindungsgemäß ist zum Anreichern eines Eingangs-Dokumentendatenstroms, der wenigstens eine Formatdefinitionen beinhaltende Eingangs-Formatdatei sowie eine in Bereiche und/oder Unterbereiche strukturierte, variable Daten enthaltende Eingangs-Dokumentendatei enthält, mit Finishing-Befehlen vorgesehen, daß eine Kontrolldatei angelegt wird, in der Ebenenstrukturen definiert werden, die den Bereichen und/oder den Unterbereichen der Eingangs-Dokumentendatei entsprechen. Weiterhin werden in der Kontrolldatei die Finishing-Befehle den Ebenen zugeordnet, so daß mit einem Computerprogramm-Modul anhand der Kontrolldatei, der Eingangs-Formatdatei und der Eingangs-Dokumentendatei folgende Dateien automatisch erzeugt werden:
(a) Eine Ausgangs-Formatdatei, die in aufrufbaren Gruppen die Finishing-Befehle enthält und
(b) eine die variablen Daten und bereichs- oder unterbereichsweise zugehörige Gruppenaufrufe enthaltende Ausgangs-Dokumentendatei.

Ein Vorteil der Erfindung gegenüber herkömmlichen Verfahren ist, daß der Anwender seine bestehenden Druckproduktionsaufträge nicht selbst zu verändern braucht. Insbesondere AFP-Anwendungen können ganz unabhängig von dem Ort und der Art ihres Ausdruckes Druckdaten erzeugen. Zusätzliche Finishing-Befehle für Geräte zum Vor- bzw. Nachverarbeiten von Druckgut im Druckproduktionsprozeß werden in einem Datenanreicherungsprozeß zu neuen oder existierenden Druckdatenströmen ergänzt, was insbesondere in einem Production-in-Time-Vorgang erfolgen kann, kurz bevor der Druckauftrag tatsächlich verarbeitet wird. Durch die weitestgehende Automatisierung des Vorgangs kann ein erfindungsgemäßer Datenanreicherungsprozeß sehr kurzfristig angestoßen werden, wobei die Prozeßgeschwindigkeit zwischen 10 000 und 50 000 Seiten pro Minute liegen kann. Ein kompletter, riesiger Druckauftrag kann dadurch innerhalb von nur wenigen Minuten so aufbereitet werden, daß er die Fähigkeiten einer komplex ausgebauten Druckproduktionsstraße voll oder teilweise nutzen kann. Zusätzlich zur Anreicherung von Druckdaten mit Finishing-Befehlen können die Daten, insbesondere über das selbe Computerprogramm-Modul, angereichert werden mit weiteren, mehr oder weniger von der Druckstraße unabhängigen Steuerungsdaten, beispielsweise mit Frankierungsdaten für Postversandstücke oder mit Barcode-Daten zur Erkennung von erzeugten Dokumenten in späteren Verfahrensschritten. Die Erfindung kann hierzu inbesondere mit dem Verfahren bzw. System der eingangs genannten PCT/EP02/05299 kombiniert werden, bei dem in einem Verfahren, System oder Computerprogramm zur Verarbeitung eines Dokumentendatenstroms eine Reihe von Funktionsstufen eingesetzt werden, um eine schnelle sichere Ausgabe der Dokumente in einem Produktionsumfeld, insbesondere in einem Druckproduktionsumfeld, zu ermöglichen.

Die Erfindung beruht auf der Erkenntnis, daß in einem strukturierten Eingangsdatenstrom, der mit komplexen Finishing-Befehlen angereichert werden soll, die bestehende Dokumentenstruktur ausgenutzt werden kann und über Zuweisungen von Bereichen oder Unterbereichen des Dokumentendatenstroms eine entsprechende bereichsweise Zuordnung von Finishing-Befehlen möglich ist. Gemäß einem weiteren Aspekt der Erfindung wird zur Zuweisung eine Kontrolldatei vorgesehen, in der unabhängig von dem konkreten Aufbau der Dokumenteneingangsdatei Dokumentenebenen definiert werden, auf denen bestimmte Finishing-Befehle Anwendung finden sollen. Hierdurch läßt sich dieser Vorgang sehr gut automatisieren und insbesondere für große bis sehr große, z. B. Zentausende bis Millionen von Dokumenten enthaltende Druckdatenströme automatisiert aufbereiten.

Erfindungsgemäß wird einem Anwender, der einen ressourcenstrukturierten Dokumentendatenstrom um Finishing-Operationen erweitern will, insbesondere ein Tool (Computerprogramm, Editor) zur Verfügung gestellt, mit dem er die Finishing-Operationen spezifizieren kann, die durchzuführen sind. Parameter, die die Operation genauer beschreiben, können hierbei vorgesehen sein. Weiterhin kann der Benutzer den Ort und den Bereich (oder die Ebenen) innerhalb des variablen Druckdatenstroms angeben, in denen die Finishing-Operation anzuwenden ist. Weiterhin werden von einem Computerprogramm-Modul automatisch die notwendigen Finishing-Kommandos (Copygroups, Medium Maps) in die Formatdefinitions-Datei (Formdef) eingefügt. Schließlich werden die in der variable Daten enthaltenden Dokumentendatendatei enthaltenen Verarbeitungsaufrufe (Medium Map Invokations) derart modifiziert bzw. eingefügt, daß die in die Formatdefinitionsdatei aufgenommenen Finishing-Operationen (Copygroups) aufgerufen werden, anstelle der ursprünglich in der variablen Dokumentendatendatei enthaltenen Aufrufe.

Durch die hochgradige Automatisierung der Ersetzung früherer Verarbeitungsaufrufe durch die ergänzten Aufrufe mit zusätzlichen Funktionalitäten, sind Fehler weitgehend auszuschließen. Bestehende Abläufe zur Erzeugung von Dokumentendaten brauchen nicht modifiziert zu werden. Dadurch, daß der Benutzer auf einer relativ einfachen Oberfläche (Editor, Graphical User Interface GUI, Computerprogramm) lediglich die neu zur Verfügung stehenden Finishing-Operationskommandos anzugeben braucht und die Einfügung entsprechender Aufrufe in die Dokumentendatendatei automatisch erfolgt, können auch sehr komplexe und große Dokumentendatendatein mit nur geringem Aufwand des Bedieners an die neuen Möglichkeiten im Bereich der Vorverarbeitung und Nachverarbeitung von Druckgut angepaßt werden.

In einem bevorzugten Ausführungsbeispiel der Erfindung sind die Eingangs-Dokumentendatenströme und/oder der ressourcenstrukturierte Ausgangs-Dokumentendatenstrom ein Advanced Function Presentation™ Datenstrom. Mit der Erfindung ist es dabei insbesondere möglich, andere Eingangs-Dokumentendatenströme, wie z. B. Line-Daten, PCL-Daten oder Postscript-Daten mit Finishing-Befehlen anzureichern, ggf. bereits dort integrierte Finishing-Befehle zu übernehmen oder zu überschreiben und/oder ausgangsseitig in einen Advanced Function Presentation™ Datenstrom zu erzeugen. Genausogut kann es umgekehrt vorgesehen sein, daß eingangsseitig ein Advanced Function Presentation™ Datenstrom vorliegt und dieser ausgangsseitig in einen anderen ressourcenstrukturierten Ausgangsdatenstrom umgesetzt wird.

Weitere Aspekte und Vorteile der Erfindung werden durch die nachfolgende Beschreibung von Ausführungsformen der Erfindung mit einigen Figuren deutlich. Dabei werden - wie bereits vorher - zum leichteren Verständnis gleichartige Elemente mit gleichartigen Bezugszeichen versehen.

Es zeigen:
- Figur 1:: ein Hochleistungsdrucksystem,
- Figur 2:: Herkömmliche Technik zur Verarbeitung eines strukturieren Datenstroms,
- Figur 3:: Herkömmliche Technik zur Aufbereitung eines strukturierten Datenstroms mit Finishing-Befehlen und
- Figur 4:: Erfindungsgemäße Technik zur Automatisierten Anreicherung eines strukturierten Datenstroms mit Finishing-Befehlen.

In Figur 1 ist ein Dokumenten-Druckproduktionssystem 1 gezeigt, das zum einen eine Main-Frame-Architektur 2 umfasst und zum anderen eine Netzwerk-Architektur 5, in denen jeweils Dokumentendaten bzw. Dokumentendruckdatenströme mittels Anwenderprogrammen (Tools) erzeugt werden. In der Main-Frame-Architektur 2 werden diese Druckdaten von einem Host-Computer 3, insbesondere als AFP-Druckdatenstrom oder als Zeilendruckdatenstrom, erzeugt. Vom Host-Computer 3 können die Druckdaten wahlweise über einen sog. S/370-Kanal 14a direkt an einen oder mehrere Druckgeräte 6a, 6b übertragen werden. Alternativ zu diesem Ausgabekanal können die Druckdaten auch vom Host-Computer 3 über ein Netzwerk 13 oder eine direkte Datenverbindung 14b zu einem Bearbeitungscomputer 4 übertragen werden, in dem die Druckdaten zwischengespeichert (z.B. in einem zugehörigen File-Server) und für nachfolgende Ausgabeschritte bearbeitet werden. In derartigen Host-Computern 3 werden insbesondere Druckdatenströme erzeugt, die aus größeren Datenbeständen (Datenbanken) regelmäßig Listen-Ausdrucke, Rechnungen, Verbrauchsübersichten (für Telefonrechnungen, Gasrechnungen, Bankkonten) etc. zusammenstellen. Derartige Anwendungen sind häufig bereits seit vielen Jahren im Einsatz und werden nach wie vor in mehr oder weniger unveränderter Weise benötigt (sog. Legacy-Anwendungen).

Innerhalb der Main-Frame-Architektur 2 wird der Druckproduktionsablauf von einem Überwachungssystem 7 überwacht. Es umfasst einen Überwachungscomputer 7a, der mit einer Datenbank 7b gekoppelt ist und verschiedene Computerprogrammmodule 7c enthält (vergleiche Figur 2).

Das Überwachungssystem 7 ist über ein Gerätesteuerungsnetzwerk 15 und einen Printmanager-Modul 8 mit dem Host-Computer 3 verbunden sowie über einen Konverter 9 mit einer V24-Datenleitung, die an die beiden Druckgeräte 6a, 6b ankoppelt. Der Konverter 9 setzt die V24-Signale in DMI-Protokollsignale des Gerätesteuerungsnetzwerkes 15 um. SNMP-Protokollsignale können dem Device Manager DM als DMI-Protokollsignale umgesetzt bereitgestellt werden bzw. direkt als SNMP-Protokollsignale übergeben werden.

Druckgut 19, das in den Druckern 6a, 6b aus dem Dokumenten-Druckdatenstrom erzeugt wurde und auf dem Barcodes aufgedruckt sind, kann jeweils mit einem manuell bewegbaren, funkgesteuerten Barcode-Leser 11a abgescannt werden. Die Signale werden per Funk an die Lesestation 10a übertragen und in das Gerätesteuerungsnetzwerk 15 bzw an das Überwachungssystem 7 übermittelt. Als Barcode-Leser können Leser für ein-dimensionale und/oder zwei-dimensionale Barcodes eingesetzt werden, sodass verschiedene Barcode-Systeme mit ein und derselben Lesevorrichtung gelesen werden können. Das Barcode-Lesesystem ist insbesondere konfigurierbar, d.h., auf verschiedene, anwendungsspezifische Codes bzw. die jeweils geeigneten Kontrollverfahren anwendbar.

In der Netzwerk-Architektur 5 werden Dokumentendaten mittels Anwenderprogrammen in Client-Computern 12, 12a erzeugt, die über ein Client-Netzwerk 13 untereinander sowie mit dem Bearbeitungscomputer (File-Server)4 verbunden sind. Der File-Server dient damit als zentrale Verarbeitungs- und Bearbeitungsschnittstelle für Druckdaten des gesamten Druckproduktionssystems 1. Auf ihm laufen diverse Steuerungsmodule (Softwareprogramme), durch die der gesamte Druckproduktionsablauf bzw. die gesamte Dokumentenbearbeitung anwendungsspezifisch, produktionstechnisch und gerätesteuerungsseitig an die jeweiligen Gegebenheiten optimal angepasst wird.

Im File-Server werden insbesondere folgende Funktionen ausgeführt, die im Zusammenhang mit den nachfolgenden Figuren genauer beschrieben werden:

### 1. Converting Indexing Sorting

Bei dieser Funktion werden eingehende Druckdaten auf ein einheitliches Datenformat konvertiert, nach vorgegebenen Parametern indiziert und in eine vorgegebene Sortierreihenfolge umsortiert. Dies ermöglicht insbesondere die für die nachfolgende Dokumentenausgabe optimierte Umsortierung des Datenstroms, beispielsweise das Zusammenfügen verschiedener Seiten, die im Eingangsdatenstrom nicht aufeinander folgen, derart zu einem Mail-Piece zusammen zu sortieren, dass sie beispielsweise in einem Kuvertiergerät 22b gemeinsam zu einer Briefsendung einkuvertiert werden können.

### 2. Einfügen von Steuerungsinformationen

Bei dieser Funktion werden in den Datenstrom Steuerungsinformationen, insbesondere Barcodes eingefügt, anhand denen eine zusammengehörige Datengruppe (z.B. Seite, Blatt, Dokument, Mail-Piece) als solche erkennbar und im Produktionsprozess an den verschiedenen Verarbeitungsstationen eindeutig lokalisierbar ist.

### 3. Datenreduktion

Mit dieser Funktion lassen sich Steuerungsdaten, die im Eingangsdatenstrom vom Host-Computer 3 bzw. Anwender-Computer 12 an den Bearbeitungscomputer 4 geliefert worden sind, dahingehend filtern, dass solche Steuerungsdaten, die bei der gegebenen Gesamtsystemanordnung nicht benötigt werden, entfernt werden. Durch die Verbindung aller beteiligten Ausgabegeräte (Drucker 6a bis 6d, Schneidegerät (Cutter) 22a, Kuvertiergerät 22b) über das Gerätesteuerungsnetzwerk 15, kann bereits im Bearbeitungscomputer 4 entschieden werden, welche Steuerungsdaten des Eingangsdatenstroms von keinem der angeschlossenen Geräte benötigt wird. Durch Entfernen dieser Daten aus dem Datenstrom kann der Datenstrom insgesamt reduziert werden, insbesondere dann, wenn lediglich leere Feldeinträge zu entsprechenden Steuerungsdaten im Eingangsdatenstrom enthalten sind.

### 4. Extraktion

Mit dieser Funktion lassen sich aus dem Ausgangsdatenstrom vorgegebene Daten filtern bzw. aussondern, wodurch ein komprimierter Datenstrom (verdichtete Daten), insbesondere für Steuerungs- und Statusdaten, entsteht, der mit sehr hoher Geschwindigkeit zwischen den beteiligten Geräten und dem Überwachungscomputer austauschbar ist. Hierdurch ist es möglich, die Überwachung der beteiligten Geräte in Echtzeit (Realtime) auszuführen.

Die Funktionen 1. - 4. sind von einem Computerprogramm-Modul "CIS" (Converting, Indexing and Sorting) weitgehend automatisiert durchführbar, auf das später nochmals genauer eingegangen wird.

### 5. Wiederholungsdruck (Reprint)

Wenn im Zuge der Weiterverarbeitung der Daten, insbesondere bei der Ausgabe der Daten auf einem der Druckgeräte 6a, 6b, 6c oder 6d, in einem der Nachverarbeitungsgeräte 18a, 18b oder auch im Druckcomputer 16, ein Fehler auftritt, so kann dies durch das Überwachungssystem 7 anhand der im Bearbeitungscomputer 4 eingefügten Steuerungs-Barcodes festgestellt werden und der Nachdruck der von der Störung betroffenen Dokumente (Seiten, Blätter, Mail-Pieces) angefordert werden. Diese Wiederholungsdruck-Anforderung wird maßgeblich im Bearbeitungscomputer 4 gesteuert.

Druckdaten, die vom Bearbeitungscomputer 4 fertiggestellt wurden, werden über die Druckdatenleitung 14c an einen Druckserver 16 geleitet. Dessen Aufgabe ist es im wesentlichen, den Bearbeitungscomputer 4 zu entlasten. Dies erfolgt durch Zwischenspeicherung der fertiggestellten Druckdaten bis zu deren Abruf über die Datenleitung 14d an einen oder beide Drucker 6c, 6d. Der Druckserver 16 ist somit in erster Linie aus Gründen der Performance (Geschwindigkeits) im Gesamtsystem integriert. Bei Systemen, deren Druckgeschwindigkeit weniger groß ist, kann auf den Druckserver 16 auch verzichtet werden.

Dokumentendaten, die an die Drucker 6c bzw. 6b übermittelt und dort auf einen Aufzeichnungsträger (z.B. Papier) gedruckt werden, werden im Gesamtsystem weiteren Bearbeitungsstufen, nämlich dem Schneidegerät 18a und dem Kuvertierungsgerät 18b der weiteren Verarbeitung zugeführt. Damit ist der Druckproduktionsprozess abgeschlossen.

Die gedruckten Dokumente werden auf ihrem Verarbeitungsweg zwischen dem Druckgerät 6 und dem letzten Nachverarbeitungsgerät 18b hinsichtlich verschiedener Kriterien mit einem Testsystem 17 getestet, nämlich durch ein optisches Testsystem 17a hinsichtlich ihrer optischen Druckqualität, mit einem Barcode-Testsystem 17b hinsichtlich ihres Vorhandenseins, ihrer Konsistenz und/oder ihrer Reihenfolge sowie mit einem MICR-Testsystem 17c, sofern der Druck mittels magnetisch lesbarem Toner (Magnetic Ink Character Recognition Toner) gedruckt wurde. Die vom Testsystem 17 gelieferten Daten der verschiedenen Testsysteme werden von einem gemeinsamen seriellen Datenerfassungsmodul (Serial Delta Aquisition Modul) 17d an das Gerätesteuerungsnetzwerk 15 übermittelt und dem Überwachungssystem 7 zugeführt. Dort werden die jeweiligen Systemdaten erfasst und in Echtzeit die Geräte überprüft sowie die jeweiligen Positionen der Dokumente hinsichtlich ihrer Korrektheit bezüglich des Druckauftrages getestet.

Weitere Details eines derartigen Testsystems 17 sind im US-Patent Nr. 6,137,967 bzw. in dazu korrespondierenden Patentanmeldungen beschrieben. Der Inhalt dieses Patents bzw. dieser Patentanmeldungen wird hiermit durch Bezugnahme in die vorliegende Beschreibung aufgenommen.

Die fertig gedruckten Dokumente 23 können wiederum mit einem Barcode-Leser 11b erfasst werden, der z.B. funkgesteuert mit einer zugehörigen Steuerungseinrichtung 10b verbunden ist, welche wiederum über das Gerätesteuerungsnetz 15 ihre Daten an das Überwachungssystem 7 liefert.

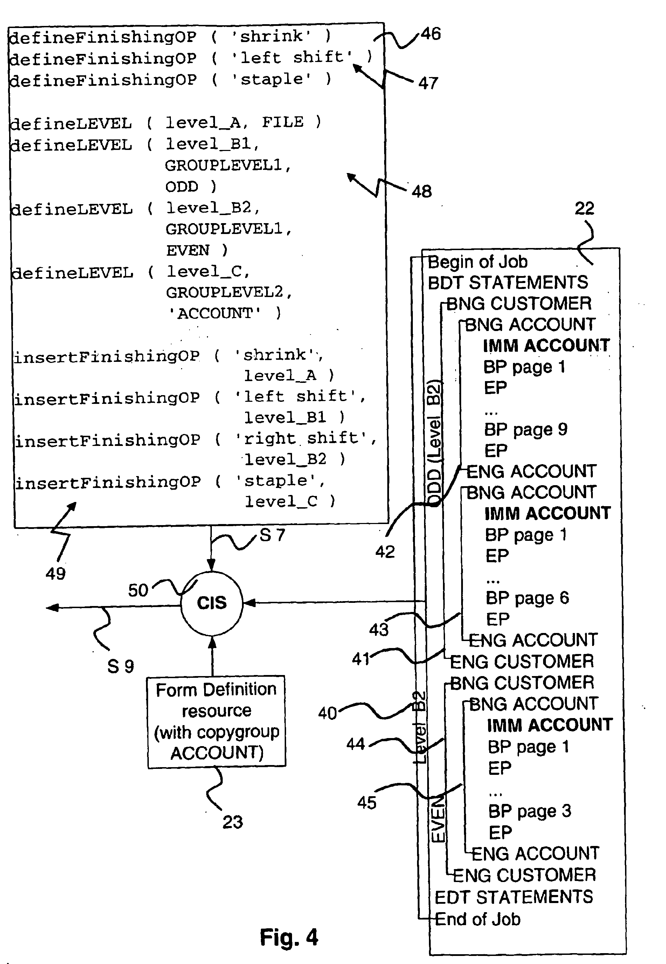

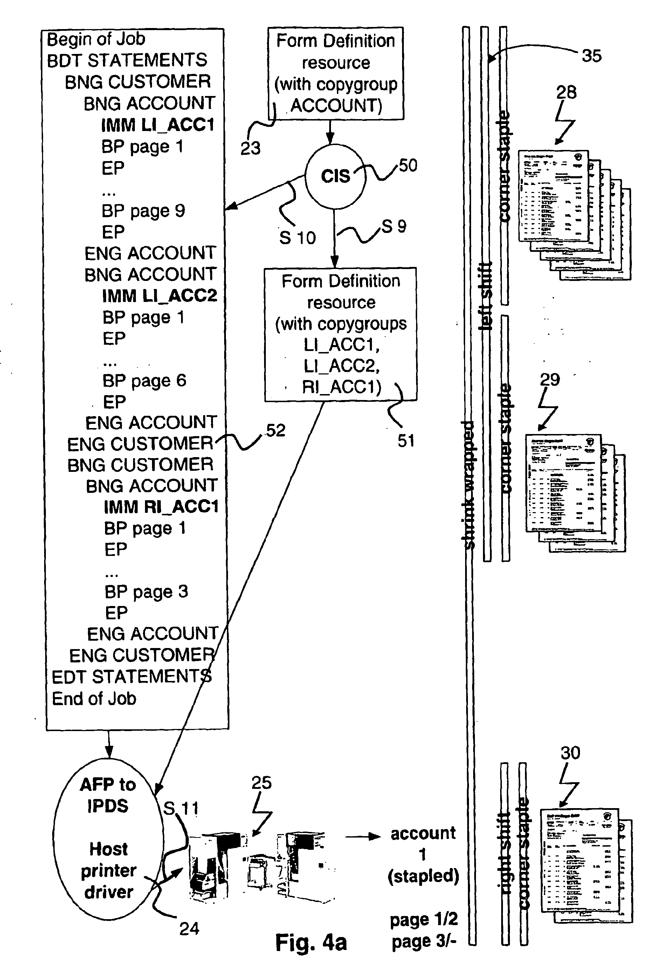

In Figur 4 ist anhand der Eingangs-Druckdatendatei 22 und der. Eingangs-Formdef-Datei 23, die bereits Grundlage für die Beschreibungen der Figuren 2 und 3 waren, gezeigt, wie erfindungsgemäß ein Ausgangsdruckdatenstrom im Datenformat AFP erzeugt wird. Dazu ist es zunächst einmal hilfreich, die Datenstruktur in der Eingangs-Druckdatendatei 22 genauer zu betrachten. Mit der Klammer 40 sind alle Daten der Druckdatendatei, dem größten zusammengehörigen Bereich der Druckdaten, vom Befehl "Beginn of Job" bis zum Befehl "End of Job" umklammert. Der AFP-Druckdatenstrom gliedert sich dann in nachfolgende Unterbereiche, die jeweils mehr oder weniger große, zusammengehörige Dokumente, wie z. B. Mail-Pieces oder Seiten, signalisieren. Die Erfindung macht sich diese bereichsorientierte Struktur zu Nutze. Im Beispiel der Druckdatendatei 22 ist ein erster Bereich eröffnet durch den Befehl "BNG Customer" und geschlossen durch den Befehl "ENG Customer". Klammer 41 zeigt diesen Bereich. Innerhalb dieses Bereichs gibt es Unterbereiche "Account", die jeweils durch die Befehle "BNG Account" und "ENG Account" begonnen bzw. beendet werden, siehe Klammern 42 und 43. Innerhalb des Account-Bereichs gliedern sich dann verschiedene Seiten jeweils wiederum strukturiert mit den Befehlen "BP" und "EP" für Beginn der Seite und Ende der Seite auf.

Auf der gleichen Hierarchie-Ebene wie die Customer-Befehle, die mit der Klammer 41 bezeichnet waren, befindet sich auch der zweite Customer-Bereich, der mit der Klammer 44 bezeichnet ist. Auch er hat einen Unterbereich "Account", der durch Klammer 45 umfaßt ist. Um diese Datenstruktur der Druckdatendatei auch in der Kontrolldatei 46 abzubilden, werden dort mit den Befehlen "Define level" Ebenen definiert. Die höchste Ebene (Level_A) ist dabei die gesamte Druckdatendatei 22, die durch Klammer 40 umspannt wird. Der höchste Bereich (Customer) der Druckdatendatei 22 gliedert sich in einen ersten Customer-Bereich, der mit Klammer 41 umspannt ist und einen zweiten Customer-Bereich, der mit Klammer 44 umspannt ist. Entsprechend dem gewünschten Verarbeitungsschema für die dort hinterlegten Dokumente (siehe Figuren 1 und 2), wobei die Dokumente des ersten Kunden nach links versetzt werden soll und die Dokumente des zweiten Kunden nach rechts versetzt werden sollen, müssen innerhalb dieser Bereichsebene zwei verschiedene Ebenen in der Kontrolldatei 46 definiert werden, nämlich eine Ebene, die allen ungradzahligen Rechnungen innerhalb des ersten Gruppenlevels entsprechen, siehe auch Customer-Klammer 41, und eine zweite Ebene, die allen gradzahligen Rechnungen innerhalb des Gruppenlevels 1 entsprechen, vergleiche auch zweite Customer-Klammer 44.

Schließlich werden in der Kontrolldatei 46 die verschiedenen Finishing-Operationen den zuvor definierten Ebenen zugeordnet, im Beispiel der Figur 4 der Ebene "Level_A" der Finishing-Job "Shrink", der Ebene "Level_B1" die Finishing-Operation "Left/Shift" und der Ebene "Level_B2" die Finishing-Operation "Right/Shift" und der Ebene "Level_C" die Finishing-Operation "Staple".

Die im Schritt S7 fertiggestellte Kontrolldatei 46 enthält drei Datenbereiche, nämlich einen ersten Datenbereich 47, in dem die verschiedenen Finishing-Operationen, die von Druckvor- bzw. Nachverarbeitungsgeräten ausgeführt werden können, definiert sind, einen Definitionsbereich 48 für Ebenen, in dem verschiedene Ebenen des strukturierten Eingangsdatenstroms 22 definiert werden und einen Definitionsbereich 49 für die Zuordnungen, die zwischen den Finishing-Operationen 47 und den definierten Ebenen 48 getroffen werden sollen bzw. welche Finishing-Operations-Befehle in welche Ebenen der strukturierten Datenstromdatei 22 eingefügt werden sollen. Sobald der Anwender die Kontrolldatei 46 fertiggestellt hat, kann mit dem CIS-Computerprogramm-Modul 50 automatisch aus der Druckdatendatei 22, der Formdef-Datei 23 und der Kontrolldatei 46 im Schritt S9 einen neue Formdef-Datei 51 sowie im Schritt S10 eine neue Druckdatendatei 52 zeitgleich erzeugt werden. Aus der Formdef-Datei 23 und den in der Kontrolldatei 46 angegebenen Finishing-Operationen werden die neuen Copygroups LI_ACC1, LI_ACC2 und RI_ACC1 erzeugt. Weiterhin bewirkt das CIS-Computerprogramm-Modul 50, daß aus der Druckdatendatei 22 und den Definitions-Bereich 48 für Ebenen sowie dem Definitionsbereich 49 für Zuordnungen, die modifizierte Druckdatendatei erzeugt wird. Das CIS-Computerprogramm-Modul 50 (CIS steht für Converting Indexing and Sorting), siehe auch die Beschreibung zu Figur 1), untersucht dazu die Eingangs-Druckdatendatei 22 auf ihre logische, hierarchische Struktur und weist den verschiedenen Datenbereichen die Ebenen zu, d. h. die Ebene Level_A dem gesamten Dokument entsprechend der Klammer 40, Level_B1 dem Datenbereich der Klammer 41 usw. Anhand diese Zuordnung und den im Definitionsbereich 49 getroffenen Zuordnungen können entsprechende Finishing-Befehle, die im Bereich 47 definiert worden waren, in die Druckdatendatei 22 exakt an den richtigen Positionen eingefügt werden, so daß die Druckdatendatei 52 entsteht. Das CIS-Computerprogramm-Modul 50 benutzt also die Informationen, die in der Kontrolldatei 46 enthalten sind und modifiziert die Medium Maps "Account", die in der ursprünglichen Formdef-Datei 23 enthalten waren und deren korrespondierende Aufrufe in der ursprünglichen Druckdatendatei 22 "IMM Account" und modifiziert diese entsprechend den nunmehr verfeinerten, zusätzlichen Finishing-Befehlen. Die Umsetzung erfolgt automatisch durch das CIS-Computerprogramm-Modul 50 und garantiert somit ein in sich logisches, aufeinander abgestimmtes bzw. synchronisiertes Ergebnis.

Die resultierende, neue Formdef-Datei 51 enthält neue Medium Maps, wobei die Bezeichnungen "LI_ACC1" usw. rein willkürlich sind und völlig automatisch sowie zufällig durch das CIS-Computerprogramm-Modul erzeugt werden können. Eine einmal vergebene Bezeichnung wird dann jedoch behalten. Die neuen Medium Maps ersetzen jedenfalls die vorhergehenden ACCOUNT Medium Maps der ursprünglichen Formdef-Datei 23.

Weitere Einzelheiten des CIS-Computerprogramm-Moduls 50 können der WO 01/77807 A2 und der PCT/EP02/05299 entnommen werden. Eine wichtige Funktionalität des CIS-Computerprogramm-Moduls 50, die in der älteren WO-Veröffentlichung '807 angesprochen sind, ist die Normalisierung der Daten der Eingangs-Druckdatendatei 22. Sie wird im Schritt S10 konviertiert und ggf. so umsortiert, daß gleiche Auftragsarten und/oder gleiche Kunden gemeinsam hintereinander ausgedruckt werden, so daß die nachfolgende Verarbeitung der Dokumente (Stapeln, kuvertieren, heften etc.) vereinfacht ist.

Die modifizierte Druckdatei 52 und die modifizierte Formdef-Datei 51 werden im Schritt S11 einem Host-Druckertreiber 24 zugeführt, der den AFP-Datenstrom in einen APDS-Datenstrom an einen IPDS-und UP³I-fähigen Drucker geleitet. Die UP³I-Kommandos, die in den Medium Maps enthalten sind, werden in entsprechende IPDS-Triplets umgewandelt, bevor sie an den Drucker gesandt werden (Schritt S11).

Wie bereits in den Figuren 2 und 3 besteht auch im Ausführungsbeispiel der Figur 4 das mit dem Verfahren erzeugte Druckgut aus fünf Blättern für Kunden 1 und dessen erste Rechnung, drei Blättern für die zweite Rechnung des Kunden 1 und zwei Blättern für den Kunden 2. Diesesmal sind die Blätter gestapelt, verschoben und folienverschweißt, wie dies vom Anwender gewünscht war.

Aufgrund der strukturellen Korrespondenz zwischen Eingangsdatei 22 und Kontrolldatei 46 ist der Aufwand, Zusatzgeräte-Funktionalitäten, wie UP³ I-Funktionen, in eine existierende Anwendung eines ressourcenstrukturierten Druckdatenstroms einzubringen, relativ gering. Durch die Automatisierung kann unabhängig von der Größe der Anwendung (Zahl der Dokumente, Seiten und/oder Mail-Pieces) und der Zahl der Medium Maps in der Formdefinitions-Datei eine sichere Konvertierung erfolgen. Weiterhin sind die Spezifikationen der ursprünglichen Formdefinition-Datei 23 nicht notwendig, so daß der AFP-Anwender, der eine UP³I-Datenerweiterung durchführen will, keine Zugriffe auf die ursprüngliche Kontroll-Datei benötigt, mit der die originäre Formdef-Datei 23 erzeugt wurde. Ein AFP-Anwender, der zusätzliche Geräte-Funktionalitäten in den Datenstrom implementieren will, braucht auch keinen Zugriff zu einer ursprünglichen PPFA-Kontrolldatei oder zum Anwendungsprogramm, das den Datenstrom ursprünglich erzeugt hat, weil er lediglich auf einer komfortablen Bedien-Oberfläche die zusätzlichen Befehle in den Datenstrom einschließlich der Formdef-Datei 23 einfügt.

Im Schritt S11 werden die modifizierte Druckdatendatei 52 und die modifizierte Formdef-Datei 51 durch den Host-Druckertreiber 24 in einen IPDS-Datenstrom umgewandelt und dieser IPDS-Druckdatenstrom an das Drucksystem 25 zur Ausgabe ausgegeben. Dieses produziert im Schritt S12 drei Dokumente 28, 29 und 30, wie sie bereits anhand der Figuren 2 und 3 näher erläutert wurden.

In den oben angegebenen Ausführungsbeispielen wurden jeweils AFP-Druckdaten um Finishing-Befehle angereichert, um Dokumente in verschiedener Art und Weise einer Druckvorverarbeitung und/oder einer Drucknachverarbeitung zu unterziehen. Die Erfindung ist jedoch nicht nur auf AFP-Druckdatenströme bzw. entsprechend ressourcenstrukturierte Eingabedateien geeignet, sondern kann beispielsweise auch für sogenannte Zeilendaten angewandt werden, die ansich unstrukturiert sind. Mittels eines geeigneten Computerprogramm-Moduls, beispielsweise dem von der Firma IBM bekannten Computerprogramm ACIF oder dem in der vorliegenden Erfindung bereits verwendeten Computerprogramm "CIS" 50, das auch in der WO 01/77807 A2 näher erleutert wird, können solche Zeilendaten derart umgewandelt werden, daß mittels einer sogenannten Pagedef-Datei die Zeilendatendatei in eine strukturierte Datei umgewandelt wird. Diese strukturierte Datei entspricht dann der Druckdatendatei 22 der oben geschilderten Ausführungsbeispiele und kann mittels einer entsprechenden Formdef-Datei 23 wiederum mit der Erfindung automatisch zu einer mit Finishing-Befehlen angereicherten Ausgabe-Datei 52 umgewandelt werden.

Neben Zeilendaten können auch Extendable-Markup-Language-Daten (XML-Daten) mit Finishing-Operationen angereichert werden. Der XML-Standard ist vor allem im Bereich von Internet-Seiten ein wohl bekannter Standard. Auch Personalized-Printer-Markup-Language-Daten (PPML-Daten) können mit der vorliegenden Erfindung um Finishing-Befehle angereichert werden. Schließlich ist es auch möglich, weitere, bekannte Arten von Dokumentedatenströmen, wie beispielsweise Daten der Printer-Controll-Language (PCL) in der erfindungsgemäßen Weise zu verarbeiten. Dabei können Finishing-Befehle bereits im ursprünglichen Datenstrom (PCL) enthalten sein, der PCL-Datenstrom in einen AFP-Datenstrom umgewandelt werden und dabei die bereits bestehenden Finishing-Befehle übernommen werden und wahlweise mit zusätzlichen Finishing-Befehlen angereichert werden. Die Anreicherung erfolgt dann in der erfindungsgemäßen Weise.

Mit der Erfindung ist es schließlich auch denkbar, statt einer Datenanreicherung eine Datenreduktion vorzunehmen, d. h. eine Druckdaten-Eingangsdatei, die Finishing-Operationen enthält, um diese Operationen zu vermindern. Der grundsätzliche erfindungsgemäße Ablauf mit dem Erstellen einer Kontroll-Datei, die bestimmte Ebenen definiert und gewisse Finishing-Operationen diesen Ebenen zuweist, bleibt dabei erhalten. Es wird lediglich statt dem Hinzufügen von Finishing-Befehlen das Entfernen von Finishing-Befehlen festgelegt. Genausogut kann vorgesehen sein, Finishing-Befehle auszutauschen, wodurch z. B. Finishing-Befehle, die auf einen bestimmten Typ oder eine bestimmte Version von Finishing-Gerät aufsetzt, durch entsprechend geänderte Typen oder Versionen zu ersetzen. Dies kann insbesondere vorteilhaft sein, wenn eine zu druckende Datei Finishing-Befehle einer bestimmten Norm (z. B. UP³I) enthält und an einer Anlage bearbeitet werden soll, die diese Norm nicht erfüllt, z. B. nicht UP³ I-fähig ist. Weiterhin ermöglicht die Erfindung, Finishing-Befehle bzw. Daten einer ersten Norm zu ersetzen durch Finishing-Befehle bzw. Daten einer zweiten Norm, beispielsweise, wenn eine Anwendung auf einem neuen System ablaufen soll.

Mit der Erfindung sind somit die Grundlagen geschaffen, sehr flexibel mit Druckdatenströmen in mehr oder weniger komplexen Druckproduktionssystemen umzugehen, in denen die Daten, Dokumente bzw. Aufzeichnungsträger in mehreren verschiedenen Geräten verarbeitet werden.

Bei der Umwandlung eines PCL- oder PS (Postscript) Datenstrom in AFP kann es zudem vorgesehen sein, daß die Formdef-Datei in einem Zuge mit der Umwandlung der Druckdatendatei erstellt wird, d. h. sie wird sozusagen "on the fly" gebildet. Mit diesen beiden Dateien (Formdef-Datei und Druckdatendatei) und der vom Anwender erzeugten erfinderischen Kontrolldatei kann dann direkt und sehr schnell die modifizierte Druckdatendatei und die modifizierte Formdef-Datei zur Verarbeitung des Druckauftrags in einem Drucksystem mit Finishing-Befehlen erfolgen.

Die Erfindung kann insbesondere als Computerprogramm (Software) realisiert sein. Sie kann damit als Computerprogramm-Modul als Datei auf einem Datenträger wie einer Diskette oder CD-Rom oder als Datei über ein Daten- bzw. Kommunikationsnetz verbreitet werden. Derartige und vergleichbare Computerprogramm-Produkte oder Computerprogramm-Elemente sind Ausgestaltungen der Erfindung. Der erfindungsgemäße Ablauf kann in einem Computer, in einem Druckgerät oder in einem Drucksystem mit vorgeschalteten oder nachgeschalteten Datenverarbeitungsgeräten Anwendung finden, insbesondere wenn das Computerprogramm auf einem geeigneten Computer abläuft und dort einen erfindungsgemäßen Verfahrensablauf bewirkt. Dabei ist klar, daß entsprechende Computer, auf denen die Erfindung angewandt wird, weitere, an sich bekannte technische Einrichtungen wie Eingabemittel (Tastatur, Mouse, Touchscreen), einen Mikroprozessor, einen Daten- bzw. Steuerungsbus, eine Anzeigeeinrichtung (Monitor, Display) sowie einen Arbeitsspeicher, einen Festplattenspeicher und eine Netzwerkkarte enthalten können.

### Bezugszeichenliste

- 1a...1c: erste Gruppe von Dokumenten
- 2a...2c: zweite Gruppe von Dokumenten
- 3a...3c: mailpieces (Sendungen)
- 3: Host Computer
- 4: Bearbeitungscomputer (File Server)
- 5: Netzwerk-Architektur
- 6: Ausgabegerät
- 6a...6d: Druckgeräte
- 7: Überwachungssystem
- 7a: Überwachungscomputer
- 7b: Datenbank
- 7c: Computerprogramm-Module
- 8: Print Manager
- 9: Konverter
- 10a, 10b: Lesestation
- 11a, 11b: Hand-Barcodeleser
- 12, 12a: Client-Computer (Anwendernetzwerk)
- 13: Netzwerk für Client
- 14a..14d: Druckdatenleitungen
- 15: Gerätesteuerungsnetzwerk
- 16: Druckserver
- 16a: Bildschirm
- 17: Testsystem
- 17a: optisches Testsystem
- 17b: Barcode Testsystem
- 17c: MICR-Testsystem
- 17d: Datenerfassungs-Modul
- 18a: Schneidegerät
- 18b: Kuvertierer
- 19: Druckgut
- 20: Formatierungs-Computerprogramm
- 21: Kontrolldatei
- 22: Druckdatendatei
- 23: Formdef-Datei
- 24: Host-Druckertreiber
- 25: Drucksystem
- 26: erstes Druckgerät
- 27: zweites Druckgerät
- 28: erstes Dokument
- 29: zweites Dokument
- 30: drittes Dokument
- 31: PPFA-Kontrolldatei
- 31a: erster Teil der PPFA-Kontrolldatei
- 31b: zweiter Teil der PPFA-Kontrolldatei
- 32: PPFA-Computerprogramm
- 33: PPFA-Formdef-Datei
- 34: Druckdatendatei
- 35: Nachverarbeitungsschritte
- 36: Nachverarbeitungsschritte

- 40: Job-Klammer
- 41: Customer-Klammer
- 42: Erste Account-Klammer
- 43: Zweite Account-Klammer
- 44: Zweite Customer-Klammer
- 45: Dritte Account-Klammer
- 46: Kontrolldatei
- 47: Definitionsbereich für Finishing-Operationen
- 48: Definitionsbereich für Ebenen
- 49: Definitionsbereich für Zuordnungen
- 50: CIS-Computerprogramm-Modul
- 51: Modifizierte formdef-Datei
- 52: Modifizierte Druckdatendatei

- S1: Erzeugen der Kontrolldatei
- S2: Verändern der Druckdatendatei
- S3: Erzeugen des IPDS-Druckdatenstroms
- S4: Ausdrucken
- S5: Erzeugen der PPFA-Kontrolldatei
- S6: Erzeugen der PPFA-Formdef-Datei
- S7: Erzeugen der Kontrolldatei 46
- S8: Erzeugen des IPDS-Datenstroms
- S9: Erzeugen des neuen formdef-Datei
- S10: Konvertierungsprozeß für variable Druckdaten
- S11: Umwandlung AFP → IPDS
- S12: Dokumentenproduktion

## Patentansprüche

1. Verfahren zum Anreichern eines Eingangs-Dokumentendatenstroms,
bei dem Finishing-Befehle in den Eingangs-Dokumentendatenstrom, der wenigstens eine Formatdefinitionen beinhaltende Eingangs-Formatdatei (23) und eine in Bereiche und/oder Unterbereiche strukturierte, variable Daten enthaltende Eingangs-Dokumentendatendatei (22) enthält, eingefügt werden
wobei in einer Kontrolldatei (46) Ebenenstrukturen definiert werden, die den Bereichen (40) und/oder den Unterbereichen (41, 42, 43, 44) der Eingangs-Dokumentendatendatei (22) entsprechen,
wobei in der Kontrolldatei (46) die Finishing-Befehle den Ebenen zugeordnet werden und
wobei anhand der Kontrolldatei (46), der Eingangs-Formatdatei (23) und der Eingangs-Dokumentendatendatei (22) von einem Computerprogrammmodul (50) automatisch erzeugt wird:
(a) eine Ausgangs-Formatdatei (51), die in aufrufbaren Gruppen die Finishing-Befehle enthält, und
(b) eine die variablen Daten und bereichs- oder unterbereichsweise zugehörige Gruppenaufrufe enthaltende Ausgangs-Dokumentendatendatei (52).

2. Verfahren nach Anspruch 1, wobei in der Kontrolldatei (46) die Finishingbefehle (47) und die Ebenen (48) definiert werden sowie eingetragen wird, welche Finishingbefehle in welcher Ebene angewandt werden.

3. Verfahren nach Anspruch 2, wobei in der Kontrolldatei (46) festgelegt wird, welche Verarbeitungsbefehle auf welchen Ebenen ausgeführt werden.

4. Verfahren nach einem der vorhergehenden Ansprüche, wobei das Dokumentenverarbeitungssystem (1) ein Druckproduktionssystem ist, das ein Druckgerät (26, 27) und mindestens ein Gerät (18a, 18b) zur Verarbeitung des Druckgutes (19) vor oder nach dem Druckvorgang umfasst und wobei die Finishingbefehle mindestens eines der Geräte (18a, 18b) zur Verarbeitung des Druckgutes (19) vor oder nach dem Druckvorgang ansteuern.

5. Verfahren nach einem der vorhergehenden Ansprüche, wobei mit dem Computerprogrammmodul (50) die Daten der Ausgangs-Formatdefinitionsdatei (51) und die Daten der Ausgangs-Dokumentendatei (52) zueinander korrespondierend erzeugt werden.

6. Verfahren nach einem der vorhergehenden Ansprüche, wobei der resourcenstrukturierte Eingangs-Dokumentendatenstrom (22) und/oder der resourcenstrukturierte Ausgangs-Dokumentendatenstrom ein Advanced Function Presentation™ Datenstrom ist.

7. Verfahren nach einem der Ansprüche 1 bis 5, wobei der resourcenstrukturierte Eingangs-Dokumentendatenstrom (22) und/oder der resourcenstrukturierte Ausgangs-Dokumentendatenstrom ein XML-, PPML-, PCL- oder Post Script-Datenstrom ist.

8. Verfahren nach den Anspruch 6, wobei die Eingangs- und Ausgangs-Formatdefinitionsdateien (23, 51) jeweils eine Formdef-Datei sind und dass der Computerprogrammabschnitt (50) die Ausgangs-Formdef-Datei (51) gegenüber der Eingangs-Formdef-Datei (23) mit veränderten Medium Maps versieht.

9. Verfahren nach Anspruch 6 und Anspruch 8, wobei die Ausgangs-Dokumentendatei (52) eine Druckdatei mit variablen Druckdaten ist und der Computerprogrammabschnitt (50) die variablen Daten mit Aufrufen der Medium Maps der Ausgangs-Formdef-Datei (51) anreichert.

10. Verfahren nach einem der vorhergehenden Ansprüche, wobei eine nicht resourcenstrukturierte Datei eingelesen und in einen resourcenstrukturiereten Eingangs-Datenstrom umgewandelt wird und dann einem Verfahren nach einemder vorhergehenden Ansprüche unterzugen wird.

11. Verfahren nach Anspruch 10, wobei nicht resourcenstrukturierte Datei eine Zeilendaten-Datei ist.

12. Verfahren nach einem der Ansprüche 10 oder 11, wobei zum Umwandeln der nicht resourcenstrukturierten Datei dasselbe Computerprogrammmodul (50) verwendet wird wie zum Aufbereiten der resourcenstrukturierten Eingangsdatei.

13. Verfahren zum Verändern oder Entfernen von Finishing-Befehlen in einem Eingangs-Druckdatenstrom,
bei dem der Eingangs-Druckdatenstrom wenigstens eine Formatdefinitionen und mindestens einen Finishing-Befehl beinhaltende Eingangs-Formatdatei (23) sowie eine in Bereiche und/oder Unterbereiche strukturierte, variable Daten enthaltende Eingangs-Dokumentendatendatei (22) enthält,
wobei in einer Kontrolldatei (46) Ebenenstrukturen definiert werden, die den Bereichen (40) und/oder den Unterbereichen (41, 42, 43, 44) der Eingangs-Dokumentendatendatei (22) entsprechen,
wobei in der Kontrolldatei (46) die veränderten Finishing-Befehle den Ebenen zugeordnet werden und
wobei anhand der Kontrolldatei (46), der Eingangs-Formatdatei (23) und der Eingangs-Dokumentendatendatei (22) von einem Computerprogrammmodul (50) automatisch erzeugt wird:
(a) eine Ausgangs-Formatdatei (51), die in aufrufbaren Gruppen die veränderten Finishing-Befehle enthält oder die zu entfernenden Finishing-Befehlen nicht mehr enthält, und
(b) eine die variablen Daten und bereichs- oder unterbereichsweise zugehörige Gruppenaufrufe enthaltende Ausgangs-Dokumentendatendatei (52).

14. Computerprogrammprodukt, das Finishing-Befehle in einen Eingangs-Dokumentendatenstrom einfügt, der wenigstens eine Formatdefinitionen beinhaltende Eingangs-Formatdatei (23) und eine in Bereiche und/oder Unterbereiche strukturierte, variable Daten enthaltende Eingangs-Dokumentendatendatei (22) enthält,
wobei in einer Kontrolldatei (46) Ebenenstrukturen definiert werden, die den Bereichen (40) und/oder den Unterbereichen (41, 42, 43, 44) der Eingangs-Dokumentendatendatei (22) entsprechen,
wobei in der Kontrolldatei (46) die Finishing-Befehle den Ebenen zugeordnet werden und
wobei anhand der Kontrolldatei (46), der Eingangs-Formatdatei (23) und der Eingangs-Dokumentendatendatei (22) von einem Computerprogrammmodul (50) automatisch erzeugt wird:
(a) eine Ausgangs-Formatdatei (51), die in aufrufbaren Gruppen die Finishing-Befehle enthält, und
(b) eine die variablen Daten und bereichs- oder unterbereichsweise zugehörige Gruppenaufrufe enthaltende Ausgangs-Dokumentendatendatei (52).

15. Computerprogrammprodukt nach Anspruch 14, wobei in der Kontrolldatei (46) die Finishingbefehle (47) und die Ebenen (48) definiert werden sowie eingetragen wird, welche Finishingbefehle in welcher Ebene angewandt werden.

16. Computerprogrammprodukt nach Anspruch 15, wobei in der Kontrolldatei (46) festgelegt wird, welche Verarbeitungsbefehle auf welchen Ebenen ausgeführt werden.

17. Computerprogrammprodukt nach einem der Ansprüche 14 bis 16, wobei das Dokumentenverarbeitungssystem (1) ein Druckproduktionssystem ist, das ein Druckgerät (26, 27) und mindestens ein Gerät (18a, 18b) zur Verarbeitung des Druckgutes (19) vor oder nach dem Druckvorgang umfasst und wobei die Finishingbefehle mindestens eines der Geräte (18a, 18b) zur Verarbeitung des Druckgutes (19) vor oder nach dem Druckvorgang ansteuern.

18. Computerprogrammprodukt nach einem der Ansprüche 14 bis 17, wobei es geeignet ist, als resourcenstrukturierten Eingangs-Dokumentendatenstrom (22) und/oder als resourcenstrukturierten Ausgangs-Dokumentendatenstrom einen Advanced Function Presentation™ Datenstrom zu bearbeiten, wobei die Eingangs- und Ausgangs-Formatdefinitionsdateien (23, 51) jeweils eine Formdef-Datei sind, wobei der Computerprogrammabschnitt (50) die Ausgangs-Formdef-Datei (51) gegenüber der Eingangs-Formdef-Datei (23) mit veränderten Medium Maps versieht und wobei die Ausgangs-Dokumentendatei (52) eine Druckdatei mit variablen Druckdaten ist und der Computerprogrammabschnitt (50) die variablen Daten mit Aufrufen der Medium Maps der Ausgangs-Formdef-Datei (51) anreichert.

19. Gerätesystem zum Anreichern eines Eingangs-Dokumentendatenstroms,
das Finishing-Befehle in den Eingangs-Dokumentendatenstrom, der wenigstens eine Formatdefinitionen beinhaltende Eingangs-Formatdatei (23) und eine in Bereiche und/oder Unterbereiche strukturierte, variable Daten enthaltende Eingangs-Dokumentendatendatei (22) enthält, einfügt wobei eine Kontrolldatei (46) vorgesehen ist, in der Ebenenstrukturen definierbar sind, die den Bereichen (40) und/oder den Unterbereichen (41, 42, 43, 44) der Eingangs-Dokumentendatendatei (22) entsprechen,
wobei in der Kontrolldatei (46) die Finishing-Befehle den Ebenen zugeordnet sind und
wobei ein Computerprogrammmodul (50) vorgesehen ist, durch das anhand der Kontrolldatei (46), der Eingangs-Formatdatei (23) und der Eingangs-Dokumentendatendatei (22) automatisch erzeugt wird:
(a) eine Ausgangs-Formatdatei (51), die in aufrufbaren Gruppen die Finishing-Befehle enthält, und
(b) eine die variablen Daten und bereichs- oder unterbereichsweise zugehörige Gruppenaufrufe enthaltende Ausgangs-Dokumentendatendatei (52).

20. Gerätesystem nach Anspruch 19, wobei in der Kontrolldatei (46) die Finishingbefehle (47) und die Ebenen (48) definiert sind sowie eingetragen ist, welche Finishingbefehle in welcher Ebene angewandt werden.

21. Gerätesystem nach Anspruch 20, wobei in der Kontrolldatei (46) festgelegt ist, welche Verarbeitungsbefehle auf welchen Ebenen ausgeführt werden.

22. Gerätesystem nach einem der Ansprüche 19 bis 21, wobei das Dokumentenverarbeitungssystem (1) ein Druckproduktionssystem ist, das ein Druckgerät (26, 27) und mindestens ein Gerät (18a, 18b) zur Verarbeitung des Druckgutes (19) vor oder nach dem Druckvorgang umfasst und wobei mindestens eines der Geräte (18a, 18b) so ausgebildet ist, dass es die Finishingbefehle zur Verarbeitung des Druckgutes (19) vor oder nach dem Druckvorgang interpretieren kann.

23. Gerätesystem nach einem der Ansprüche 19 bis 22, wobei ein Gerät (4) zum Empfang des der resourcenstrukturierte Eingangs-Dokumentendatenstroms (22) vorgesehen ist und so ausgebildet ist, dass es einen Advanced Function Presentation™ Datenstrom interpretieren und/oder bearbeitenkann.

24. Gerätesystem nach einem der Ansprüche 19 bis 23, wobei ein Gerät (4) zum Empfang des der resourcenstrukturierte Eingangs-Dokumentendatenstroms (22) vorgesehen ist und so ausgebildet ist, dass es ein XML-, PPML-, PCL- oder Post Script-Datenstrom interpretieren und/oder bearbeitenkann.

## Claims

1. Method for enhancement of an input document data stream
in which finishing commands are inserted in the input document data stream, which comprises at least one input format file (23) containing format definitions and an input document data file (22) structured in ranges and/or sub-ranges and containing variable data,
whereby in a control file (46) level structures are defined that correspond to the ranges (40) and/or the sub-ranges (41, 42, 43, 44) of the input document data file (22),
whereby in the control file (46) the finishing commands are associated with the levels, and
whereby using the control file (46), the input format file (23) and the input document data file (22), the following are automatically generated by a computer program module (50):
(a) an output format file (51) that contains the finishing commands in callable groups, and
(b) an output document data file (52) containing the variable data and group calls associated range-by-range or sub-range-by-sub-range.

2. Method according to claim 1, whereby in the control file (46) the finishing commands (47) and the levels (48) are defined and it is registered which finishing commands are applied in which level.

3. Method according to claim 2, whereby in the control file (46) it is established which processing commands are executed on which levels.

4. Method according to any of the preceding claims, whereby the document processing system (1) is a data production system that comprises a printing device (26, 27) and at least one device (18a, 18b) for processing of the print good (19) before or after the printing event, and whereby the finishing commands activate at least one of the devices (18a, 18b) for processing of the print good (19) before or after the printing event.

5. Method according to any of the preceding claims, whereby the data of the output format definition file (51) and the data of the output document file (52) are generated corresponding to one another with the computer program module (50).

6. Method according to any of the preceding claims, whereby the resource-structured input document data stream (22) and/or the resource-structured output document data stream is an Advanced Function Presentation™ data stream.

7. Method according to any of the claims 1 to 5, whereby the resource-structured input document data stream (22) and/or the resource-structured output document data stream is an XML, PPML, PCL or PostScript data stream.

8. Method according to claim 6, whereby the input and output format definition files (23, 51) are respectively a formdef file, and that the computer program section (50) provides the output formdef file (51) with modified medium maps relative to the input formdef file (23).

9. Method according to claim 6 and claim 8, whereby the output document file (52) is a print file with variable print data, and the computer program section (50) enhances the variable data with calls of the medium maps of the output formdef file (51).

10. Method according to any of the preceding claims, whereby a non-resource-structured file is read in and is converted into a resource-structured input data stream and then is subjected to a method according to any one of the preceding claims.

11. Method according to claim 10, whereby the non-resource-structured file is a line data file.

12. Method according to one of the claims 10 or 11, whereby the same computer program module (50) as is used to prepare the resource-structured input file is used to convert the non-resource-structured file.

13. Method to change or remove finishing commands in an input print data stream,
in which the input print data stream comprises at least one input format file (23) containing format definitions and at least one finishing command as well as an input document data file (22) structured in ranges and/or sub-ranges and containing variable data,
whereby in a control file (46) level structures are defined that correspond to the ranges (40) and/or the sub-ranges (41, 42, 43, 44) of the input document data file (22),
whereby in the control file (46) the modified finishing commands are associated with the levels, and
whereby using the control file (46), the input format file (23) and the input document data file (22), the following are automatically generated by a computer program module (50):
(a) an output format file (51) that contains the modified finishing commands in callable groups or that no longer contains the finishing commands to be removed, and
(b) an output document data file (52) containing the variable data and group calls associated range-by-range or sub-range-by-sub-range.

14. Computer program product that inserts finishing commands in an input document data stream, which comprises at least one input format file (23) containing format definitions and an input document data file (22) structured in ranges and/or sub-ranges and containing variable data,
whereby in a control file (46) level structures are defined that correspond to the ranges (40) and/or the sub-ranges (41, 42, 43, 44) of the input document data file (22),
whereby in the control file (46) the finishing commands are associated with the levels, and
whereby using the control file (46), the input format file (23) and the input document data file (22), the following are automatically generated by a computer program module (50):
(a) an output format file (51) that contains the finishing commands in callable groups, and
(b) an output document data file (52) containing the variable data and group calls associated range-by-range or sub-range-by-sub-range.

15. Computer program product according to claim 14, whereby in the control file (46) the finishing commands (47) and the levels (48) are defined and it is registered which finishing commands are applied in which level.

16. Computer program product according to claim 15, whereby in the control file (46) it is established which processing commands are executed on which levels.

17. Computer program product according to any of the claims 14 to 16, whereby the document processing system (1) is a print production system that comprises a printing device (26, 27) and at least one device (18a, 18b) for processing of the print good (19) before or after the printing event, and whereby the finishing commands activate at least one of the devices (18a, 18b) for processing of the print good (19) before or after the printing event.

18. Computer program product according to any of the claims 14 to 17, whereby it is suitable to process an Advanced Function Presentation™ data stream as a resource-structured input document data stream (22) and/or as a resource-structured output document data stream, whereby the input and output format definition files (23, 51) are both a formdef file, whereby the computer program section (50) provides the output formdef file (23) with modified medium maps relative to the input formdef file (23), and whereby the output document file (52) is a print file with variable print data and the computer program section (50) enhances the variable data with calls of the medium maps of the output formdef file (51).

19. Device system for enhancement of an input document data stream,
that inserts finishing commands in the input document data stream that comprises at least one input format file (23) containing format definitions and an input document data file (22) structured in ranges and/or sub-ranges and containing variable data,
whereby a control file (46) is provided in which level structures can be defined that correspond to the ranges (40) and/or the sub-ranges (41, 42, 43 44) of the input document data file (22),
whereby in the control file (46) the finishing commands are associated with the levels, and
whereby a computer program module (5) is provided via which, using the control file (46), the input format file (23) and the input document data file (22), the following are automatically generated:
(a) an output format file (51) that contains the finishing commands in callable groups, and
(b) an output document data file (52) containing the variable data and group calls associated range-by-range or sub-range-by-sub-range.

20. Device system according to claim 19, whereby in the control file (46) the finishing commands (47) and the levels (48) are defined and it is registered which finishing commands are applied in which level.

21. Device system according to claim 20, whereby in the control file (46) it is established which processing commands are executed on which levels.

22. Device system according to any of the claims 19 to 21, whereby the document processing system (1) is a print production system that comprises a printing device (26, 27) and at least one device (18a, 18b) for processing of the print good (19) before or after the printing event, and whereby at least one of the devices (18a, 18b) is designed such that it can interpret the finishing commands for processing of the print good (19) before or after the printing event.

23. Device system according to any of the claims 19 to 22, whereby a device (4) is provided to receive the resource-structured input document data stream (22) and is designed such that it can interpret and/or process an Advanced Function Presentation™ data stream.

24. Device system according to any of the claims 19 to 23, whereby a device (4) is provided to receive the resource-structured input document data stream (22) and is designed such that it can interpret and/or process an XML, PPML, PCL or PostScript data stream.

## Revendications

1. Procédé pour l'enrichissement d'un flux de données de documents d'entrée, dans lequel des instructions de finition sont insérées dans le flux de données de documents d'entrée qui contient au moins un fichier de formats d'entrée (23) contenant des définitions de format, et un fichier de données de documents d'entrée (22) structuré en zones et/ou en sous-zones et contenant des données variables, des structures de niveau qui correspondent aux zones (40) et/ou aux sous-zones (41, 42, 43, 44) du fichier de données de documents d'entrée (22) étant définies dans un fichier de contrôle (46), les instructions de finition étant affectées aux niveaux dans le fichier de contrôle (46), et un module de programme informatique (50) générant automatiquement, à l'aide du fichier de contrôle (46), du fichier de formats d'entrée (23) et du fichier de données de documents d'entrée (22) :
(a) un fichier de formats de sortie (51), qui contient les instructions de finition en groupes interrogeables, et
(b) un fichier de données de documents de sortie (52), contenant les données variables et les interrogations groupées correspondantes par zone ou sous-zone.

2. Procédé selon la revendication 1, dans lequel on définit dans le fichier de contrôle (46) les instructions de finition (47) et les niveaux (48), et on y inscrit quelles instructions de finition sont utilisées dans quels niveaux.

3. Procédé selon la revendication 2, dans lequel on définit dans le fichier de contrôle (46) quelles instructions de traitement sont exécutées à quels niveaux.

4. Procédé selon l'une des revendications précédentes, dans lequel le système de traitement des documents (1) est un système de production d'impression qui comprend une imprimante (26, 27), et au moins un appareil (18a, 18b) pour le traitement du produit d'impression (19) avant ou après le processus d'impression, et dans lequel les instructions de finition commandent au moins un des appareils (18a, 18b) pour le traitement du produit d'impression (19) avant ou après le processus d'impression.

5. Procédé selon l'une des revendications précédentes, dans lequel les données du fichier de définition de formats de sortie (51) et les données du fichier de données de documents de sortie (52) sont générées par le module de programme informatique (50) en correspondance les unes avec les autres.

6. Procédé selon l'une des revendications précédentes, dans lequel le flux de données de documents d'entrée (22) structuré sur la base des ressources et/ou le flux de données de documents de sortie structuré sur la base des ressources est un flux de données Advanced Function Présentation™.

7. Procédé selon l'une des revendications 1 à 5, dans lequel le flux de données de documents d'entrée (22) structuré sur la base des ressources et/ou le flux de données de documents de sortie structuré sur la base des ressources est un flux de données XML, PPML, PCL ou Post Script.

8. Procédé selon la revendication 6, dans lequel les fichiers de définition de formats d'entrée et de sortie (23, 51) sont chacun un fichier Formdef, et dans lequel le segment de programme informatique (50) attribue au fichier Formdef de sortie (51) des cartes moyennes modifiées par rapport au fichier Formdef d'entrée (23).

9. Procédé selon la revendications 6 et la revendication 8, dans lequel le fichier de documents de sortie (51) est un fichier d'impression contenant des données d'impression variables, et dans lequel le segment de programme informatique (50) enrichit les données variables avec les interrogations des cartes moyennes du fichier Formdef de sortie (51).

10. Procédé selon l'une des revendications précédentes, dans lequel un fichier non structuré sur la base des ressources est récupéré et converti en un flux de données d'entrée structuré sur la base des ressources, puis soumis à un procédé selon l'une des revendications précédentes.

11. Procédé selon la revendication 10, dans lequel le fichier non structuré sur la base des ressources est un fichier de données de lignes.

12. Procédé selon l'une des revendications 10 ou 11, dans lequel on utilise, pour la conversion du fichier non structuré sur la base des ressources, le même segment de programme informatique (50) que pour la mise en forme du fichier d'entrée structuré sur la base des ressources.

13. Procédé pour la modification ou l'effacement d'instructions de finition dans un flux de données d'impression d'entrée, dans lequel le flux de données d'impression d'entrée contient au moins un fichier de formats d'entrée (23) contenant des définitions de format et au moins une instruction de finition, ainsi qu'un fichier de données de documents d'entrée (22) structuré en zones et/ou en sous-zones contenant des données variables, des structures de niveau qui correspondent aux zones (40) et/ou aux sous-zones (41, 42, 43, 44) du fichier de données de documents d'entrée (22) étant définies dans un fichier de contrôle (46), les instructions de finition modifiées étant affectées aux niveaux dans le fichier de contrôle (46), et un module de programme informatique (50) générant automatiquement à l'aide du fichier de contrôle (46), du fichier de formats d'entrée (23) et du fichier de données de documents d'entrée (22) :
(a) un fichier de formats de sortie (51), qui contient les instructions de finition modifiées en groupes interrogeables, ou qui ne contient plus les instructions de finition à effacer, et
(b) un fichier de données de documents de sortie (52), contenant les données variables et les interrogations groupées correspondantes par zone ou sous-zone.

14. Produit de programme informatique qui insère des instructions de finition dans un flux de données de documents d'entrée qui contient au moins un fichier de formats d'entrée (23) contenant des définitions de format et un fichier de données de documents d'entrée (22) structuré en zones et/ou en sous-zones contenant des données variables, des structures de niveau qui correspondent aux zones (40) et/ou aux sous-zones (41, 42, 43, 44) du fichier de données de documents d'entrée (22) étant définies dans un fichier de contrôle (46), les instructions de finition étant affectées aux niveaux dans le fichier de contrôle (46), et un module de programme informatique (50) générant automatiquement à l'aide du fichier de contrôle (46), du fichier de formats d'entrée (23) et du fichier de données de documents d'entrée (22) :
(a) un fichier de formats de sortie (51), qui contient les instructions de finition en groupes interrogeables, et
(b) un fichier de données de documents de sortie (52), contenant les données variables et les interrogations groupées correspondantes par zone ou sous-zone.

15. Produit de programme informatique selon la revendication 14, dans lequel on définit dans le fichier de contrôle (46) les instructions de finition (47) et les niveaux (48), et on y inscrit quelles instructions de finition sont utilisées dans quels niveaux.

16. Produit de programme informatique selon la revendication 15, dans lequel on définit dans le fichier de contrôle (46) quelles instructions de traitement sont exécutées à quels niveaux.

17. Produit de programme informatique selon l'une des revendications 14 à 16, dans lequel le système de traitement des documents (1) est un système de production d'impression qui comprend une imprimante (26, 27), et au moins un appareil (18a, 18b) pour le traitement du produit d'impression (19) avant ou après le processus d'impression, et dans lequel les instructions de finition commandent au moins un des appareils (18a, 18b) pour le traitement du produit d'impression (19) avant ou après le processus d'impression.

18. Produit de programme informatique selon l'une des revendications 14 à 17, lequel convient pour traiter sous la forme d'un flux de données de documents d'entrée (22) et/ou sous la forme d'un flux de données de documents de sortie structuré sur la base des ressources, un flux de données Advanced Function Presentation™, les fichiers de définition de formats d'entrée et de sortie (23, 51) étant chacun des fichiers Formdef , le segment de programme informatique (50) attribuant au fichier Formdef de sortie (51) des cartes moyennes modifiées par rapport au fichier Formdef d'entrée (23), et le fichier de données de documents de sortie (52) étant un fichier d'impression contenant des données variables, et le module de programme (50) enrichissant les données variables avec les interrogations des cartes moyennes du fichier Formdef de sortie (51).

19. Système pour l'enrichissement d'un flux de données de documents d'entrée qui insère des instructions de finition dans le flux de données de document d'entrée qui contient au moins un fichier de formats d'entrée (23) contenant des définitions de format, et un fichier de données de documents d'entrée (22) structuré en zones et/ou en sous-zones contenant des données variables, dans lequel est prévu un fichier de contrôle (46) dans lequel peuvent être définis des niveaux de structures qui correspondent aux zones (40) et/ou aux sous-zones (41, 42, 43, 44) du fichier de données de documents d'entrée (22), dans lequel les instructions de finition sont affectées aux niveaux dans le fichier de contrôle (46), et dans lequel est prévu un module de programme informatique (50) qui génère automatiquement à l'aide du fichier de contrôle (46), du fichier de formats d'entrée (23) et du fichier de données de documents d'entrée (22) :
(a) un fichier de formats de sortie (51), qui contient les instructions de finition en groupes interrogéables, et
(b) un fichier de données de documents de sortie (52), contenant les données variables et les interrogations groupées correspondantes par zone ou sous-zone.

20. Système selon la revendication 19, dans lequel on définit dans le fichier de contrôle (46) les instructions de finition (47) et les niveaux (48), et on y inscrit quelles instructions de finition sont utilisées dans quels niveaux.

21. Système selon la revendication 20, dans lequel on définit dans le fichier de contrôle (46) quelles instructions de traitement sont exécutées à quels niveaux.

22. Système selon l'une des revendications 19 à 21, dans lequel le système de traitement des documents (1) est un système de production d'impression qui comprend une imprimante (26, 27) et au moins un appareil (18a, 18b) pour le traitement du produit d'impression (19) avant ou après le processus d'impression, et dans lequel au moins un des appareils (18a, 18b) est conçu pour pouvoir interpréter les instructions de finition pour le traitement du produit d'impression (19) avant ou après le processus d'impression.

23. Système selon l'une des revendications 19 à 22, dans lequel est prévu un appareil (4) pour la réception du flux de données de documents d'entrée (22) structuré sur la base des ressources, conçu de telle manière qu'il peut interpréter et/ou traiter un flux de données Advanced Function Presentation™.

24. Système selon l'une des revendications 19 à 23, sur lequel est prévu un appareil (4) pour la réception du flux de données de documents d'entrée (22) structuré sur la base des ressources, conçu de telle manière qu'il peut interpréter et/ou traiter un flux de données XML, PPML, PCL ou Post Script.
